# EUROPEAN PATENT APPLICATION

(11) **EP 1 205 890 A1**
(43) Date of publication of application: **15.05.2002**
(21) Application number: 00124784.0
(22) Date of filing: 14.11.2000
(51) Int. Cl.: G07F 9/08

(54) **Internet payment enabling device for vending machines**

(71) Applicant: Marconi Commerce Systems S.r.L., 50145 Firenze (IT)
(72) Inventor: Carapelli, Giovanni, 50142 Firenze (IT)
(74) Representative: Fitchett, Stuart Paul

(57) **Abstract**

An Internet payment enabling device for vending machine for selling products or services to purchasers having a mobile communicator enabled to a wireless internet connection, comprising: a communication interface (INT1) with at least a vending machine (VM); computer means able to support transmission through the Internet of data identifying said (VM); a connection (CN) for the transmission/reception of said data to and from a remote Internet operator (OPR); means to notify a purchaser identifying data of the vending machine.

## Description

### Background of the art

At present several vending systems are already known, in particular the so called "self service" systems (e.g. ATM systems and "Point Of Sale" (POS)) by which a vendor is connected to a remote banking operator and is able to sell a product or a service to a purchaser paying by credit/debit card.

These known systems present some drawbacks due to the fact that they have to be directly connected to a financial operator which guarantees the payment.

Furthermore, the existing POS have to be certified in order to guarantee the security of the payment and of the transaction procedures, which are processed by the same POS device.

From the point of view of the customers of a POS, a further problem of the existing devices consists in that a customer has first to insert his credit card into a slot of the POS device, then directly communicate to the POS his credit card PIN number.

Consequently, the customer is exposed, as it actually often happens, to risks of a fraudulent use of the same number.

A further drawback of the existing vending devices is that they have to be equipped with complicated and costly mechanical devices (like card readers) which need maintenance and are difficult to be upgraded in case of a new payment procedure.

### Aim of the invention

A first aim of the invention is to overcome the limits of the conventional vending systems.

A second aim is to provide an easy-to-use system allowing sellers to sell in real time to customers provided of internet enabled wireless communicator goods and services in a secure manner.

A third aim is to guarantee customers form fraudulent use of the personal data transmitted to the payment system.

### Summary of the invention

These aims have been reached according to the invention by a system according to the annexed claims.

A first advantages is that the enabler of the invention immediately permits, in a easy and inexpensive way, both existing and new vending machines like POS and similar devices , to access to internet technologies and to the specific improvements that such technologies brings in terms of security of a payment system.

A further advantage of the invention is that an efficient and reliable diagnostic control of the payment procedures is obtained in a simple way even using already existing vending machines.

A still further advantage is that the security features of the payment procedures are increased and "transferred" from the vending machine to the mobile communicator of the customer;

A still further advantage is that it is possible to upgrade the device of the invention from a remote centre, so that when a different payment procedure has to be adopted it is no necessary to modify the composition of the device.

A still further advantage is that any mobile phone can be enabled to a plurality of remote credit operators connected with the device of the invention.

### List of drawings

Further advantages of the present invention will be evident from the following specification and from the annexed drawings, given as non limiting examples, in which:

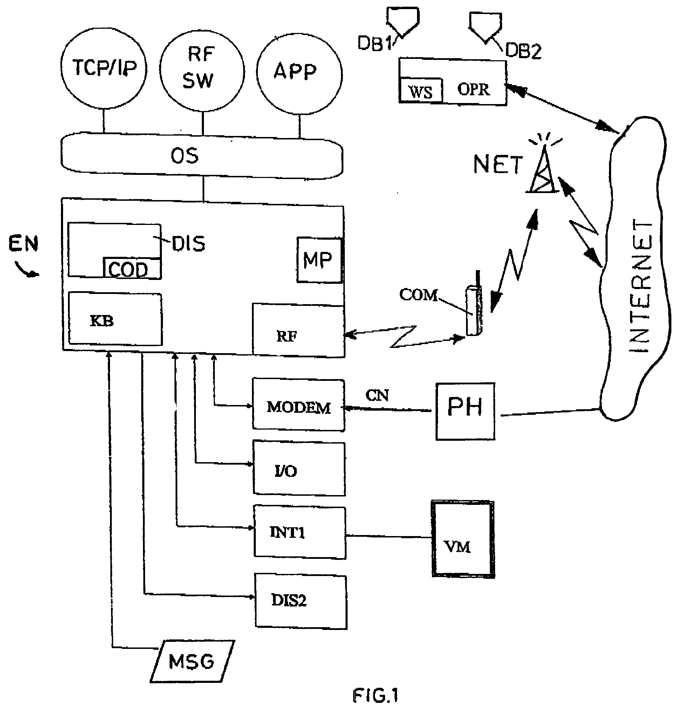

- fig.1 schematically shows an embodiment of the enabler of the invention.

### Detailed description of the invention

With reference to the annexed drawings an Internet enabler EN according to the invention comprises:
- a microprocessor unit MP able to support Internet data transmission to and from a mobile Internet enabled communicator COM.
   Preferably MP is controlled by a multitasking operating system OS (for example LINUX) supporting a data transmission based on the TCP/IP protocol, and COM is a WAP enabled cellular phone (or anyway Internet enabled);
- a communication interface INT1 with at least a vending machine VM, where the definition "Vending machines" includes ATM, POS, retailing machines and Personal Computers when they are utilised to buy on line;
- means to make available a code COD to a customer having a mobile communicator COM enabled to a Internet transmission protocol,
- a connection CN to a phone line PH. Preferably CN consists of a ISDN or analogic modem connection MODEM or a wireless connection;
- a possible service display DIS2
- a possible service signal output MSG;
- possible input/output connections I/O;
- a possible service keyboard KB.

With reference to fig.1 the enabler EN of the invention is connected through the interface INT1 to an already existing vending machine VM.

Depending on the specific technology of VM the interface INT1 can be a serial connection, or a bi-directional communication cable able to transmit data between EN and VM.

Said means to make available a code COD to a customer can consist of a display DIS of the Enabler, visualising a code COD which the purchaser can read when he is in the vicinity of EN and the latter is connected to the VM.

Depending on the architecture of VM, said display can also be part of VM and COD can be transmitted from EN to VM through the interface INT1.

According to the invention, a Internet operator OPR (for example an Internet banking operator) is provided with a first database DB1 containing identifying data of the vending machines of the system and with a second database DB2 containing identifying data of customers authorised to the purchase.

Preferably, said first database DB1 is intended to store identifying data of the vending machines as identity numbers ID and the Internet address of the vending machine.

The identifying data of DB2 comprise in particular customer identity numbers and other account data which can be utilised to authorise a purchase to that customer.

On functioning, the enabler EN is connected to VM through the interface INT1 and it sends to OPR, through the Internet connection of COM, a message containing an IP address to be associated to VM and the identifying data of VM (which are stored by OPR in DB1).

Then, OPR returns to EN a message containing a code COD which will be notified to the customer to perform a payment and by OPR to associate the requested payment to that VM and to that customer.

When a customer provided with a communicator COM wishes to request to OPR a payment, COM connects the Internet through a network access point, in order to communicate with the operator OPR by a web server WS of the operator which is preferably visualised as an internet "bookmark" on a display of the customer communicator.

Preferably, in order to guarantee the customer from possible accidental payment order the COD transmitted from OPR to EN can vary after each payment request.

According to the invention, the purchaser having a suitable communicator is in the vicinity of a vending machine provided with the EN enabler, and he can read the identifying code COD corresponding to that machine.

Preferably, the communicator is a cellular phone capable to be connected to the internet by a network access point, for example a digital cellular network NET.

In this phase, the communicator transmits from an internal secure memory location to the WS a customer ID , so that the operator can verify whether the customer is a purchaser already identified in the second database DB2.

Once the purchaser identity has been verified the operator asks the customer to transmit the corresponding code COD of the VM.

The operator receives the code COD and associates it to the corresponding IP address of the vending machine, both contained in the data base DB1, so that it can check, for example, the functioning state of the vending machine and to authorise the same to a payment.

Accordingly, the vending machine will be commanded by the operator OPR, through the communicator COM and the enabler EN, to accept the payment, after that the purchaser will be invoiced of the corresponding cost and a message of successful end of the sale procedure will be possibly displayed on the communicator display for example in the form of a SMS message which will act as a receipt of the transaction.

Analogously, a receipt of successful payment will be sent form OPR to the seller and stored and/or printed by a possible printer of the VM.

Advantageously, the communication to and from the operator and to and from the communicator are protected by encryption codes (for example SSL) and hence all the connected devices communicate in a secure manner for example through a Public key infrastructure (PKI).

According to the invention, said means to make available a code COD to a customer can consist of a bi-directional radio frequency interface RF supporting a communication with COM based on Internet protocol.

Preferably, in this embodiment the wireless connection RF is able to automatically connect the communicator of a customer with the enabler when the customer is close to the vending machine.

For example, a suitable interface RF is a Bluetooth™ enabled interface and a suitable communicator is a WAP and Bluetooth™ enabled cellular phone.

In this case, EN is provided of a suitable software RFSW able to control the Bluetooth™ interface.

Advantageously, in this embodiment the interface RF automatically transmits the code COD to the customer facing VM, so that once connected through the Internet with the OPR, the customer will have only to ask for a payment operation.

As a further advantage, in this case the vending machine does not need a display nor a printer to supply a receipt (given by the system in the form of a SMS message on the user handset) and the user interface can be completely housed by the customer communicator handset.

A still further advantage consists in that in this embodiment a vending machine is substantially maintenance-free and guaranteed from damages due to vandals (in case it contains notes or coins acceptors, that is real money).

In a further embodiment of the system the Internet access point of EN to the Internet is the same above described radio frequency interface of the Enabler, connected to the internet through a suitable connection.

In this case the user can access the Internet and connect the WS of the operator "through" the RF interface of EN.

In order to permit the owner of the VM to restrict the internet access of the user only to the connection to certain IP addresses (for example a number of authorisation centres) it is possible to encrypt these connections by suitable encryption protocols.

In a further embodiment, the enabler of the invention consists of an electronic card suitable to be connected to a card slot of a Personal Computer connected to a remote banking operator.

In this case the card is provided of a tamper proof area comprising a microprocessor unit having the above described features, where INT1 is the usual connection of the a card with the PC architecture, for example a BUS connection, while INT2 can be a code COD visualised by the display of the PC or again a radio frequency interface of the above described kind.

In view of the above said, it is evident that by equipping a VM with the enabler of the invention EN, the latter operates the payment routing trough a suitable Payment Software Agent (APP) run by the MP unit.

In other words, EN acts like a "bridge" between user and remote operator, while the security features, previously included in the conventional POS device (or in the equivalent vending machine), are embedded in the mobile communicator of the customer and are guaranteed by encrypted communication protocols.

Advantageously, thank to the invention it is then sufficient to protect the microprocessor unit MP of the enabler (for example sealing with resin the relevant area) to achieve a substantially tamper-proof payment system where the software is protected by the protection of the EN electronic equipment, and the communication security from the customer and the remote operator is guaranteed by the encryption protocols utilised by the mobile digital communicators

The present invention has been described with reference to preferred embodiments, anyway, equivalent modifications can be made without outgoing from the scope of the invention.

As an example, the enabler of the invention previously described as a separate "box" to be connected to existing vending machines, can be embedded into a new apparatus having both the features of the enabler and the features of a "in se" conventional vending machine.

## Claims

1. Internet payment enabling device for vending machine for selling products or services to purchasers having a mobile communicator enabled to a wireless internet connection, comprising:
- a communication interface (INT1) with at least a vending machine (VM);
- computer means able to support transmission through the Internet of data identifying said (VM);
- a connection (CN) for the transmission/reception of said data to and from a remote Internet operator (OPR);
- means to notify a purchaser identifying data of the vending machine;

2. Device according to claim 1, wherein said computer means comprise a microprocessor unit (MP) supporting a data transmission program based on the TCP/IP protocol.

3. Device according to claim 1, wherein said connection (CN) comprises of an ISDN or analogic modem connection (MODEM) to a phone line (PH).

4. Device according to claim 1, wherein said connection (CN) consists of a wireless bi-directional connection supporting Internet transmission protocols.

5. Device according to claim 1, wherein said means to notify a purchaser comprise a display (DIS) able to visualise a code (COD) identifying (VM).

6. Device according to claim 1, wherein said means to notify a purchaser comprise a radio frequency bi-directional interface (RF) able to automatically establish a connection with a mobile communicator (COM) of a purchaser in the vicinity of the vending machine and to transmit to him a code (COD) identifying (VM).

7. Device according to claim 1, wherein said vending machine is a personal computer (PC) connectable with a remote Internet operator (OPR), for payment of products or services, wherein:
- said computer means comprise an electronic card suitable to be inserted into a slot of said (PC);
- said interface (INT1) is constituted by the connections of the card slot to the (PC);
- said connection (CN) is constituted by a modem connection of the card to a phone line;
- said means to notify a purchaser identifying data of the vending machine are constituted by a display of the (PC) visualising a code (COD).

8. Device according to claim 7, wherein said microprocessor unit is a protected anti-tampering area of the card.
